# EUROPÄISCHE PATENTSCHRIFT

(11) **EP 3 885 499 B1**
(45) Veröffentlichungstag und Bekanntmachung des Hinweises auf die Patenterteilung: **30.08.2023**
(21) Anmeldenummer: 21164311.9
(22) Anmeldetag: 23.03.2021
(51) Int. Cl.: E03C 1/02, H02G 3/12, H02G 3/18

(54) **WANDEINBAU-ANSCHLUSSBOXEINHEIT MIT FUNKTIONSFLÄCHENKÖRPER**
CONNECTION BOX UNIT BUILT IN TO A WALL WITH FUNCTIONAL AREA BODY
UNITÉ DE BOÎTIER DE RACCORDEMENT DESTINÉE À ÊTRE ENCASTRÉE POURVU DE CORPS DE SURFACE FONCTIONNEL

(30) Priorität: 24.03.2020 DE 102020203794
(43) Veröffentlichungstag der Anmeldung: 29.09.2021
(60) Teilanmeldung: 23187162.5
(73) Patentinhaber: Hansgrohe SE, 77761 Schiltach (DE)
(72) Erfinder: Lehmann, Günther, 77709 Oberwolfach (DE); Schorer, Jürgen, 77761 Schiltach (DE)
(74) Vertreter: Patentanwälte Ruff, Wilhelm, Beier, Dauster & Partner mbB

(56) Entgegenhaltungen:
- EP-A1- 1 382 757
- DE-A1-102017 100 707
- DE-U1- 20 321 431

## Beschreibung

Die Erfindung bezieht sich auf eine Wandeinbau-Anschlussboxeinheit mit einem Boxgehäusekörper, der einen rückseitigen Basisabschnitt und einen vom Basisabschnitt nach vorn vorstehenden Hülsenabschnitt umfasst, einem eine Funktionsfläche aufweisenden Funktionsflächenkörper und einer Verbindungseinrichtung, die zum lösbaren Festlegen des Funktionsflächenkörpers am Basisabschnitt in unterschiedlichen axialen Höhen der Funktionsfläche konfiguriert ist und mindestens eine Verbindungsstruktur am Basisabschnitt radial außerhalb des Hülsenabschnitts und einen mit der Verbindungsstruktur zusammenwirkenden Verbindungskörper umfasst, der über eine Betätigungsschnittstelle nutzerbetätigbar relativ zur Verbindungsstruktur und zum Funktionsflächenkörper zwischen einer Löseposition und einer Festlegeposition beweglich angeordnet ist. Der Hülsenabschnitt umgibt umfangsseitig einen Einbaukomponenten-Aufnahmeraum, der über ein offenes vorderes Stirnende des Hülsenabschnitts zugänglich ist.

Derartige Anschlussboxeinheiten werden beispielsweise in der Sanitärinstallationstechnik zum Anschließen von Einbaukomponenten in Form von Sanitärkomponenten wie Wasserauslaufarmaturen für Waschtische, Badewannen, Duschbrausen oder Küchenspülen oder diesen vorgelagerten sanitären Thermostat-, Mischer- und/oder Absperrventileinheiten, an gebäudeseitig vorinstallierte Wasserleitungsanschlüsse und in der Elektroinstallationstechnik zum Anschließen von elektrischen Einbaukomponenten wie Steckdosen, Abzweigdosen, Sensoren, Aktoren, Lichtschalter etc. an gebäudeseitig vorinstallierte Elektroleitungsanschlüsse verwendet. Typisch sind hierbei vor allem Unterputz-Ausführungen, bei denen die Wandeinbau-Anschlussboxeinheit derart in die betreffende Gebäudewand eingebaut wird, dass sie vorderseitig möglichst bündig mit der fertiggestellten Gebäudewandfläche, z.B. einer verputzten Wandfläche oder einer Fliesenwandfläche, abschließt. Es versteht sich, dass die Gebäudewand hierbei sowohl eine vertikale Gebäudewand im engeren Sinn als auch eine Bodenwand bzw. Bodenfläche oder eine Deckenwand bzw. Deckenfläche eines Gebäudes bzw. Zimmers sein kann, im Sanitärfall z.B. eines Duschraums, eines Badezimmers, eines Toilettenraums, einer Küche etc.

Als verbindendes Bindeglied zum Anschließen der Einbaukomponente an die gebäudeseitigen Leitungsanschlüsse fungiert üblicherweise ein im Basisabschnitt des Boxgehäusekörpers angeordneter Anschlusskörper, wobei der Basisabschnitt entsprechend zum Anordnen bzw. Halten des Anschlusskörpers eingerichtet ist. Der Anschlusskörper weist eine dem Einbaukomponenten-Aufnahmeraum zugewandte Einbaukomponenten-Anschlusskontur und eine an einer Außenseite des Boxgehäusekörpers zugängliche Leitungs-Anschlussschnittstellenstruktur auf.

Die Leitungs-Anschlussschnittstellenstruktur beinhaltet typischerweise eine oder mehrere Anschlusschnittstellen, im Sanitärfall eine Fluidleitungs-Anschlussschnittstellenstruktur insbesondere in Form entsprechender Rohrleitungs-Anschlussstutzen zum Ankoppeln an je einen korrespondierenden gebäudeseitigen Rohrleitungs-Anschlussstutzen z.B. für Kaltwasser, Warmwasser oder aus Kaltwasser und Warmwasser gemischtes Mischwasser, im Elektrofall eine Elektroleitungs-Anschlussschnittstellenstruktur insbesondere in Form von Kabelleitungsanschlüssen.

Die Einbaukomponenten-Anschlusskontur des Anschlusskörpers, im Sanitärfall eine Sanitärkomponenten-Anschlusskontur und im Elektrofall eine Elektrokomponenten-Anschlusskontur, ist dafür eingerichtet, mit einer korrespondierenden Anschlusskontur einer anzukoppelnden Einbaukomponente, wie einer Misch- und/oder Absperrventileinheit oder einer Wasserauslaufarmatur im Sanitärfall bzw. einer elektrischen Einbaukomponente im Elektrofall, zusammenzuwirken. Im Sanitärfall beinhaltet der Anschlusskörper eine Fluidkanalstruktur zur Fluidverbindung der boxaußenseitigen Fluidleitungs-Anschlussschnittstellenstruktur mit der boxinnenseitigen Sanitärkomponenten-Anschlusskontur, im Elektrofall eine elektrisch leitende Verbindung der boxaußenseitigen Elektroleitungs-Anschlussschnittstellenstruktur mit der boxinnenseitigen Elektrokomponenten-Anschlusskontur.

Die Anschlussboxeinheit wird mit ihrer Rückseite bzw. einem rückseitigen Boden voraus in eine Gebäudewandöffnung eingesetzt oder an einer Gebäudewand, z.B. einer im Trockenbau erstellten Wand, platziert, wobei die benötigten Leitungsverbindungen zwischen den gebäudeseitigen Anschlüssen einerseits und der Anschlussschnittstellenstruktur des Anschlusskörpers andererseits hergestellt werden. Nach Fertigstellung der Wand kann dann über das offene vordere Stirnende des Boxgehäusekörpers die Einbaukomponente in den Aufnahmeraum des Boxgehäusekörpers eingebracht und an die passende Anschlusskontur des Anschlusskörpers angekoppelt werden.

Der Funktionsflächenkörper, der einteilig oder aus mehreren einzelnen Bauteilen gebildet sein kann, stellt mit seiner Funktionsfläche eine Fläche bereit, die eine ihr zugedachte Funktion erfüllt, z.B. eine Befestigungsfunktion und/oder eine Dichtfunktion. So kann die Funktionsfläche beispielsweise dazu dienen, den Funktionsflächenkörper und dadurch den Boxgehäusekörper, an dessen Basisabschnitt der Funktionsflächenkörper festgelegt ist, an einer gebäudeseitigen Wand, wie oben erwähnt im Sanitärfall z.B. einer Seiten-, Decken- oder Bodenwand eines Badezimmers, eines Duschraums, eines Toilettenraums, eines anderen Sanitärraums, einer Küche etc., zu befestigen.

Durch die entsprechend konfigurierte Verbindungseinrichtung kann der Funktionsflächenkörper am Basisabschnitt in unterschiedlichen axialen Höhen seiner Funktionsfläche lösbar festgelegt werden, wodurch die Funktionsfläche variabel in einer für den jeweiligen Anwendungsfall zur Erfüllung der ihr zugedachten Funktion optimalen axialen Höhe bereitgestellt werden kann, z.B. um auf dem betreffenden axialen Niveau eine Befestigungsfläche zur Befestigung der Anschlussboxeinheit bzw. ihres Boxgehäusekörpers an einer gebäudeseitigen Wandfläche und/oder eine Dichtfläche zur Abdichtung der Anschlussboxeinheit gegenüber einer gebäudeseitigen Wandfläche bereitzustellen.

Über die Betätigungsschnittstelle kann der Benutzer den Verbindungskörper zwischen der Löseposition und der Festlegeposition bewegen und dadurch den Funktionsflächenkörper am Basisabschnitt des Boxgehäusekörpers festlegen bzw. zum Lösen wieder freigeben. Die Betätigungsschnittstelle ist dazu geeignet zur Betätigung durch den Benutzer eingerichtet, z.B. zur werkzeuglosen Betätigung oder unter Verwendung eines Betätigungswerkzeugs und eines zugehörigen Werkzeugschnittstellenprofils an der Betätigungsschnittstelle.

Es sind verschiedentlich artverwandte sanitäre Wandeinbau-Anschlussboxeinheiten bekannt, bei denen der Funktionsflächenkörper von einer Mehrzahl von Befestigungsflanschen gebildet ist, die am Basisabschnitt in einem Bodenbereich desselben radial nach außen abstehend angeformt sind und Befestigungsösen aufweisen, mit deren Hilfe der Boxgehäusekörper auf dem Boden einer Vertiefung in einer Wand befestigt werden kann. Die Patentschriften EP 1 006 244 B1 und EP 2 636 803 B1 sowie die Offenlegungsschriften DE 10 2004 060 744 A1 und WO 2017/091839 A1 offenbaren entsprechende Ausführungen als sanitäre Wandeinbau-Anschlussboxeinheiten, wobei die letztgenannte Offenlegungsschrift zusätzlich die Möglichkeit der Ausführung als elektrische Wandeinbau-Anschlussboxeinheit offenbart. Gattungsgemäße Wandeinbau-Anschlussboxeinheiten, d.h. solche der eingangs genannten Art, unterscheiden sich davon durch ihre Fähigkeit, den Funktionsflächenkörper am Basisabschnitt in unterschiedlichen axialen Höhen der Funktionsfläche lösbar festlegen zu können.

Die Patentschrift EP 1 382 757 B1 offenbart artverwandte sanitäre Wandeinbau-Anschlussboxeinheiten, bei denen der Funktionsflächenkörper ein geschlossener Ringkörper ist, der als ein den Hülsenabschnitt des Boxgehäusekörpers ringförmig umgebender Befestigungsflansch fungiert und durch eine Schraub- oder Bajonettverbindung in unterschiedlichen axialen Höhen am Hülsenabschnitt festgelegt werden kann oder mit axial abstehenden, dübelartigen Ansätzen versehen ist, die in Befestigungsösen, welche vom Basisabschnitt an dessen Bodenbereich radial abstehen, eingeschoben und an diesen in unterschiedlichen axialen Höhen verrastet werden können.

Die Offenlegungsschrift DE 10 2004 060 744 A1 offenbart eine weitere artverwandte sanitäre Wandeinbau-Anschlussboxeinheit, bei der als Funktionsflächenkörper ein Dichtlappen fungiert, der am Hülsenabschnitt im Bereich des offenen vorderen Stirnendes radial nach außen abstehend angeformt ist und eine Dichtfläche zum Abdichten des Sanitärkomponenten-Aufnahmeraums gegenüber der Gebäudewand bereitstellt, wobei der Hülsenabschnitt des Boxgehäusekörpers von einem Faltenbalg gebildet ist, durch den der Dichtlappen in variabler axialer Höhe relativ zum Basisabschnitt des Boxgehäusekörpers platziert werden kann.

Die Offenlegungsschrift DE 10 2017 100 707 A1 offenbart eine gattungsgemäße sanitäre Wandeinbau-Anschlussboxeinheit, bei der als Funktionsflächenkörper ein den Hülsenabschnitt ringförmig umgebender, einteiliger Befestigungsrahmen fungiert und die Verbindungseinrichtung als Verbindungskörper axial vom Befestigungsrahmen abstehende Federzungen sowie zugeordnete Sicherungsclipse und als Verbindungsstruktur mit den Federzungen lösbar zusammenwirkende Rastbereiche am Außenumfang des Basisabschnitts des Boxgehäusekörpers umfasst. Der Befestigungsrahmen wird über den Hülsenabschnitt des Boxgehäusekörpers aufgeschoben, bis seine Federzungen in einer gewünschten axialen Höhe mit den Rastbereichen verrastet sind. Die Sicherungsclipse sind an Clipsführungen des Befestigungsrahmens verliersicher gehalten und können vom Benutzer dadurch betätigt werden, dass er radial nach innen auf eine als Betätigungsschnittstelle fungierende Bedienfläche der Sicherungsclipse drückt und die Sicherungsclipse axial zwischen einer die Rastverbindungen entriegelnden Montagestellung und einer die Rastverbindungen verriegelnden Sicherungsstellung verschiebt, was durch eine gegen Abrutschen sichernde Riffelung der radial nach außen gewandten Bedienfläche erleichtert wird.

Bei einer weiteren, in der Offenlegungsschrift WO 2010/069606 A1 offenbarten gattungsgemäßen sanitären Wandeinbau-Anschlussboxeinheit ist der Funktionsflächenkörper mehrteilig von je einer Befestigungsfläche an einem Kopfteil einer Mehrzahl von Haltefüßen gebildet, die mit einem Fußteil in Aufnahmeöffnungen am Außenumfang des Basisabschnitts des Boxgehäusekörpers, vorzugsweise in Eckbereichen desselben, eingefügt und in unterschiedlichen axialen Höhen fixiert werden können, so dass der Boxgehäusekörper bzw. die Anschlussboxeinheit mit Hilfe dieser Befestigungsflächen an einer gebäudeseitigen Wand festgelegt werden kann. Um eine Vorfixierung zu erzielen, kann das Einschieben der Haltefüße in die Aufnahmeöffnungen rastend ausgeführt sein. Zur Fixierung der Haltefüße in der gewünschten axialen Höhe in den Aufnahmeöffnungen wird jeweils radial von außen eine Fixierklammer in passende Nuten der Haltefüße lösbar eingesteckt. Auf diese Weise fungieren bei dieser Verbindungseinrichtung die Aufnahmeöffnungen als Verbindungsstruktur, mit der die Fußteile der Haltefüße und die Fixierklammern als Verbindungskörper zusammenwirken, wobei die radial außen liegende Seite der Fixierklammern als Betätigungsschnittstelle fungiert, an der die jeweilige Fixierklammer vom Benutzer gegriffen werden kann, um sie zwischen ihrer entriegelnden Löseposition und ihrer verriegelnden Festlegeposition in radialer Richtung zu verschieben.

Der Erfindung liegt als technisches Problem die Bereitstellung einer Wandeinbau-Anschlussboxeinheit der eingangs genannten Art zugrunde, die gegenüber dem oben erwähnten Stand der Technik insbesondere funktionelle Vorteile und/oder Vorteile hinsichtlich Fertigungs- und/oder Montageaufwand bietet.

Die Erfindung löst dieses Problem durch die Bereitstellung einer Wandeinbau-Anschlussboxeinheit mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird. Dies schließt insbesondere auch alle Ausführungsformen der Erfindung ein, die sich aus den Merkmalskombinationen ergeben, die durch die Rückbezüge in den Unteransprüchen definiert sind.

Erfindungsgemäß befindet sich die Betätigungsschnittstelle des Verbindungskörpers auf einer dem Basisabschnitt des Boxgehäusekörpers abgewandten Seite des Funktionsflächenkörpers. Dies ermöglicht es dem Benutzer vorteilhaft, den Verbindungskörper und damit die Verbindungseinrichtung auf der dem Basisabschnitt abgewandten Seite des Funktionsflächenkörpers zu betätigen, um den Funktionsflächenkörper am Basisabschnitt zu befestigen und ihn bei Bedarf wieder zu lösen bzw. in einer anderen axialen Höhe am Basisabschnitt festzulegen.

Von dieser Seite her ist der Funktionsflächenkörper in den typischen Anwendungen der Anschlussboxeinheit für den Benutzer vergleichsweise leicht zugänglich, um den Verbindungskörper zwischen seiner Löseposition und seiner Festlegeposition zu bewegen. Insbesondere ist diese Seite des Funktionsflächenkörpers für den Benutzer in der Regel auch noch zugänglich, nachdem die Anschlussboxeinheit bereits in eine gebäudeseitige Wandöffnung eingebracht bzw. an einer gebäudeseitigen Wand angeordnet wurde. Dies ermöglicht dem Benutzer z.B. eine axiale Höhenverstellung des Boxgehäusekörpers relativ zu einer Gebäudewand auch noch dann, wenn der Boxgehäusekörper bereits an der Gebäudewand angeordnet bzw. über den Funktionsflächenkörper an dieser angebracht worden ist. Zudem ist von Vorteil, dass der Basisabschnitt des Boxgehäusekörpers der Betätigung des Verbindungskörpers durch den Benutzer über die Betätigungsschnittstelle nicht im Wege ist, da sich der Basisabschnitt einerseits und die Betätigungsschnittstelle andererseits auf gegenüberliegenden Seiten des Funktionsflächenkörpers befinden.

In einer Weiterbildung der Erfindung ist der Verbindungskörper zwischen der Löseposition und der Festlegeposition drehbeweglich. Dies stellt für entsprechende Anwendungen eine in Kombination mit den anderen spezifischen Merkmalen der Verbindungseinrichtung vorteilhafte Bewegungsart für den Verbindungskörper dar. Die Drehbeweglichkeit ist für den Verbindungskörper mit vergleichsweise geringem Fertigungsaufwand und wenig Platzbedarf realisierbar und erfordert zudem relativ wenig Zugänglichkeitsraum für den Benutzer zum Bewegen des Verbindungskörpers zwischen seiner Löseposition und seiner Festlegeposition. Beispielsweise kann der Verbindungskörper in Kombination mit dem vorgenannten Erfindungsaspekt durch den Benutzer werkzeugfrei oder unter Verwendung eines Drehwerkzeugs mit geringem Platzbedarf von der dem Basisabschnitt des Boxgehäusekörpers abgewandten Seite des Funktionsflächenkörpers her gedreht werden.

In einer Weiterbildung der Erfindung ist die Verbindungseinrichtung zum wahlweisen lösbaren Festlegen des Funktionsflächenkörpers vor einer Vorderseite oder hinter einer Rückseite des Basisabschnitts des Boxgehäusekörpers konfiguriert. Dadurch ist es in vorteilhafter Weise möglich, den Funktionsflächenkörper wahlweise vor der Vorderseite oder hinter der Rückseite des Basisabschnitts des Boxgehäusekörpers anzuordnen und in dieser Lage am Basisabschnitt zu halten. Damit wird die Flexibilität hinsichtlich der Einsatzmöglichkeiten des Funktionsflächenkörpers zur Bereitstellung beispielsweise einer Befestigungsfläche oder einer Dichtfläche in wählbar unterschiedlichen axialen Positionen relativ zum Basisabschnitt weiter erhöht. Dies gilt speziell auch hinsichtlich der Möglichkeit, die Anschlussboxeinheit in unterschiedlichen axialen Positionen in oder an einer gebäudeseitigen Wand anzuordnen und in diese einzubauen bzw. an diese anzubauen.

Es versteht sich, dass die genannten Erfindungsaspekte ebenso wie die nachstehenden Weiterbildungen in entsprechenden Ausführungen der Erfindung je für sich oder in beliebiger Kombination verwirklicht sind, wie sich dies auch aus den Formulierungen der Patentansprüche ergibt.

In einer Weiterbildung der Erfindung ist die mindestens eine Verbindungsstruktur von einem im Basisabschnitt des Boxgehäusekörpers angeordneten Verbindungsstrukturelement gebildet. Dies hat den Vorteil, dass die Verbindungsstruktur spezifisch durch das Verbindungsstrukturelement im Basisabschnitt bereitgestellt wird, so dass der Basisabschnitt im Übrigen von der Verbindungsstruktur freigehalten werden kann. Alternativ kann die Verbindungsstruktur durch ein außenseitig am Basisabschnitt angeordnetes Verbindungsstrukturelement bereitgestellt sein oder ohne ein solches Verbindungsstrukturelement z.B. direkt am Basisabschnitt selbst ausgebildet sein.

In einer Ausgestaltung der Erfindung beinhaltet das Verbindungsstrukturelement ein sich zwischen einer Vorderseite und einer Rückseite des Basisabschnitts durchgehend durch den Basisabschnitt hindurch erstreckendes Hülsenelement. Dies stellt eine fertigungstechnisch und funktionell vorteilhafte Realisierung für das im Basisabschnitt des Boxgehäusekörpers angeordnete Verbindungsstrukturelement dar.

Die Realisierung des Verbindungsstrukturelements als Hülsenelement lässt sich gut mit einer drehbeweglichen Ausführung des Verbindungskörpers und/oder mit einer Zugänglichkeit des Verbindungskörpers von der vom Basisabschnitt abgewandten Seite des Funktionsflächenkörpers her kombinieren. Indem sich das Hülsenelement durch den Basisabschnitt hindurch zwischen dessen Vorder- und Rückseite erstreckt, schafft diese Realisierung des Verbindungsstrukturelements auch eine günstige Voraussetzung für eine Ausführung der Verbindungseinrichtung dergestalt, dass der Funktionsflächenkörper wahlweise vor der Vorderseite oder hinter der Rückseite des Basisabschnitts liegend am Basisabschnitt festgelegt werden kann. In alternativen Ausführungen wird ein anderes Verbindungsstrukturelement verwendet, z.B. ein sich nur von der Vorder- oder der Rückseite in den Basisabschnitt hinein, jedoch nicht durch diesen hindurch erstreckendes Hülsenelement oder ein ähnliches, nur einseitig offenes, eine Art Sacklochöffnung bildendes Element, mit dem der Funktionsflächenkörper nur von der Vorderseite oder nur von der Rückseite des Basisabschnitts her am Basisabschnitt festgelegt wird, oder eine am Basisabschnitt angeformte oder an diesem angebrachte Befestigungsöse oder ein am Basisabschnitt ausgebildeter Aufrastbereich.

In einer Weiterbildung der Erfindung beinhaltet die mindestens eine Verbindungsstruktur eine Bolzenaufnahmeöffnung mit einem ein Rastprofil aufweisenden Öffnungsrand, und der Verbindungskörper weist einen in die Bolzenaufnahmeöffnung einsteckbaren und in der Bolzenaufnahmeöffnung zwischen der Löseposition und der Festlegeposition verdrehbaren Verbindungsbolzen auf, der umfangsseitig ein Gegenrastprofil aufweist, wobei das Rastprofil und das Gegenrastprofil in der Festlegeposition des Verbindungsbolzens gegen axiales Herausbewegen des Verbindungsbolzens aus der Bolzenaufnahmeöffnung verriegelnd zusammenwirken und in der Löseposition des Verbindungsbolzens ein axiales Herausbewegen des Verbindungsbolzens aus der Bolzenaufnahmeöffnung freigeben.

Dies stellt eine für zahlreiche Anwendungen der Anschlussboxeinheit fertigungstechnisch und funktionell vorteilhafte Realisierung der Verbindungseinrichtung zum lösbaren Festlegen des Funktionsflächenkörpers am Basisabschnitt des Boxgehäusekörpers dar. Dazu wird eine Rastverbindung genutzt, die durch Verdrehen des axial in die Bolzenaufnahmeöffnung eingefügten Verbindungsbolzens in der Bolzenaufnahmeöffnung verrastet und verriegelt bzw. wieder entriegelt und ausgerastet werden kann. Alternativ ist die Verbindungseinrichtung durch eine andere herkömmliche Rastverbindung oder eine anderweitige Verbindung, wie eine Schraubverbindung, realisiert.

In einer Ausgestaltung der Erfindung beinhaltet die Betätigungsschnittstelle des Verbindungskörpers eine stirnseitige Werkzeugschnittstelle des Verbindungsbolzens. Damit lässt sich der Verbindungsbolzen an seiner betreffenden Stirnseite mittels eines entsprechenden Drehwerkzeugs zwischen seiner Löseposition und seiner Festlegeposition verdrehen. Alternativ ist die Betätigungsschnittstelle andersartig realisiert, z.B. zur direkten Nutzerbetätigung ohne Werkzeugschnittstelle oder durch eine bolzenumfangsseitige Werkzeugschnittstelle.

In einer Ausgestaltung der Erfindung beinhaltet das Rastprofil einen oder mehrere axial voneinander beabstandete Raststege, die sich jeweils innerhalb eines Raststeg-Umfangssektors der Bolzenaufnahmeöffnung erstrecken, und das Gegenrastprofil einen oder mehrere axial voneinander beabstandete Gegenraststege beinhaltet, die sich jeweils innerhalb eines Gegenraststeg-Umfangssektors erstrecken. Dies stellt eine funktionell vorteilhafte Realisierung des Rastprofils und des mit diesem zusammenwirkenden Gegenrastprofils dar, die relativ wenig Herstellungsaufwand erfordert. Durch axiales Überlappen des oder Raststege mit dem oder den Gegenraststegen wird die gewünschte Verrastung in der Festlegeposition des Verbindungsbolzens erreicht, aus welcher er in die Löseposition herausgedreht werden kann, in der keine axiale Überlappung der Raststege mit dem Gegenraststeg gegeben ist, d.h. in welcher der Raststeg-Umfangssektor axial nicht mit dem Gegenraststeg-Umfangssektor überlappt.

In einer Ausgestaltung der Erfindung beinhaltet nur das Rastprofil außerhalb des Raststeg-Umfangssektors oder nur das Gegenrastprofil außerhalb des Gegenraststeg-Umfangssektors oder sowohl das Rastprofil außerhalb des Raststeg-Umfangssektors und das Gegenrastprofil außerhalb des Gegenraststeg-Umfangssektors mindestens einen Aufraststeg innerhalb eines Aufraststeg-Umfangssektors. Mit diesem Aufraststeg lässt sich der Verbindungsbolzen in die Bolzenaufnahmeöffnung axial rastend einfügen und in dieser auf einer jeweils gewünschten axialen Höhe vorfixiert halten. Diese Vorfixierung erleichtert das anschließende Verdrehen des Verbindungsbolzens in der Bolzenaufnahmeöffnung von der Löseposition in die Festlegeposition, da der Verbindungsbolzen hierzu vom Benutzer nicht axial auf Höhe gehalten werden braucht. In alternativen Ausführungen ist keine axiale Aufrastung bzw. Vorfixierung vorgesehen oder eine solche mit anderen Mitteln realisiert, z.B. in Form einer magnetischen Vorfixierung, die den Verbindungsbolzen mittels einer entsprechend konfigurierten Magnetanordnung auf unterschiedlichen axialen Höhen vorfixiert in der Bolzenaufnahmeöffnung hält.

In einer Weiterbildung der Erfindung beinhaltet die sanitäre Wandeinbau-Anschlussboxeinheit eine Verliersicherung, die den Verbindungskörper verliersicher am Funktionsflächenkörper vormontiert hält. Damit kann der Verbindungskörper am Funktionsflächenkörper vormontiert werden, ohne verloren zu gehen, bevor dann der Funktionsflächenkörper unter Nutzung des Verbindungskörpers am Basisabschnitt des Boxgehäusekörpers festgelegt wird. In alternativen Ausführungen wird der Verbindungskörper separat bereitgestellt und erst dann am Funktionsflächenkörper angeordnet, wenn dieser am Basisabschnitt des Boxgehäusekörpers festgelegt wird.

In einer Weiterbildung der Erfindung beinhaltet die Wandeinbau-Anschlussboxeinheit eine Endlagenrastung, die den Verbindungskörper in der Festlegeposition ausrastbar am Funktionsflächenkörper verrastet. Diese Verrastung kann einem unbeabsichtigten Herausbewegen des Verbindungskörpers aus seiner der Festlegeposition entsprechenden Endlage vorbeugen. Alternativ besitzt die Anschlussboxeinheit keine derartige Endlagenrastung für den Verbindungskörper.

In einer Weiterbildung der Erfindung beinhaltet die Wandeinbau-Anschlussboxeinheit einer Verdrehsicherung, die korrespondierende Endlagenanschläge am Verbindungskörper einerseits und am Funktionsflächenkörper oder an der Verbindungsstruktur andererseits umfasst. Diese korrespondierenden Endlagenanschläge verhindern ein versehentliches bzw. unerwünschtes Weiterdrehen des Verbindungskörpers relativ zum Funktionsflächenkörper und zur Verbindungsstruktur über die Festlegeposition bzw. die Löseposition des Verbindungskörpers hinaus, wenn es sich bei dieser Verbindungskörperbewegung um eine Drehbewegung handelt. Bei alternativen Ausführungen der Anschlussboxeinheit fehlt eine derartige Verdrehsicherung.

In einer Weiterbildung der Erfindung beinhaltet der Funktionsflächenkörper einen geschlossenen Ringkörper mit einer Hülsenabschnitt-Durchführungsöffnung und mindestens einer Verbindungskörper-Durchführungsöffnung. In dieser Realisierung eignet sich der Funktionsflächenkörper insbesondere zur Bereitstellung einer sich radial um den Hülsenabschnitt des Boxgehäusekörpers herum erstreckenden Funktionsfläche, wie einer Befestigungsringfläche und/oder einer Dichtringfläche. Der Funktionsflächenkörper kann hierbei auf den Hülsenabschnitt des Boxgehäusekörpers aufgeschoben werden, wobei der Hülsenabschnitt durch die zugehörige Durchtrittsöffnung hindurchtritt, und der oder die Verbindungskörper können zum Zusammenwirken mit der Verbindungsstruktur durch die zugehörige Verbindungskörper-Durchführungsöffnung des Funktionsflächenkörpers durchgeführt werden. In alternativen Ausführungen der Anschlussboxeinheit ist der Funktionsflächenkörper andersartig realisiert, z.B. als offener Ringkörper oder ohne Verbindungskörper-Durchführungsöffnung, wobei in letzterem Fall der oder die Verbindungskörper in einer anderen herkömmlichen Weise mit dem Funktionsflächenkörper verbunden werden, z.B. über eine andere formschlüssige mechanische Verbindung wie in Form korrespondierender Halteabsätze am Verbindungskörper einerseits und am Funktionsflächenkörper andererseits.

In einer Weiterbildung der Erfindung sind der Hülsenabschnitt und der Basisabschnitt des Boxgehäusekörpers einteilig aus einem Kunststoffschaummaterial gebildet, wobei die Verbindungsstruktur am Basisabschnitt angeformt ist oder das Verbindungsstrukturelement in das Kunststoffschaummaterial des Basisabschnitt eingebettet ist. Diese Ausführung des Boxgehäusekörpers ist vorteilhaft mit der vorliegenden Realisierung der Verbindungseinrichtung zum lösbaren Festlegen des Funktionsflächenkörpers am Basisabschnitt des Boxgehäusekörpers gemäß einem oder mehreren der hierzu angegebenen Erfindungsaspekte kombinierbar. So kann beispielsweise vorgesehen sein, die Verbindungsstruktur am Basisabschnitt aus diesem Kunststoffschaummaterial zu bilden oder ein die Verbindungsstruktur bereitstellendes Verbindungsstrukturelement in das Kunststoffschaummaterial des Basisabschnitts einzubetten. In alternativen Ausführungen besteht der Hülsenabschnitt und/oder der Basisabschnitt des Boxgehäusekörpers aus einem biegesteifen, d.h. gegenüber Kunststoffschaummaterial steiferen Kunststoffmaterial. In diesem Fall kann das Verbindungsstrukturelement optional aus dem gleichen biegesteifen Kunststoffmaterial bestehen, oder die Verbindungsstruktur kann ohne eigens hierfür vorzusehendes Bauteil als in den Basisabschnitt des Boxgehäusekörpers integrierte Struktur realisiert sein.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine vorderseitige Perspektivansicht einer sanitären Wandeinbau-Anschlussboxeinheit mit vom Boxgehäusekörper getrenntem Funktionsflächenkörper,
- Fig. 2: eine rückseitige Perspektivansicht der Anschlussboxeinheit mit vom Boxgehäusekörper getrenntem Funktionsflächenkörper,
- Fig. 3: eine Draufsicht von vorn auf die Anschlussboxeinheit mit vorderseitig an einem Basisabschnitt des Boxgehäusekörpers angebrachtem Funktionsflächenkörper,
- Fig. 4: eine Schnittansicht längs einer Linie IV-IV in Fig. 3,
- Fig. 5: eine vorderseitige Perspektivansicht des Funktionsflächenkörpers,
- Fig. 6: eine rückseitige Perspektivansicht des Funktionsflächenkörpers,
- Fig. 7: eine Perspektivansicht eines Verbindungskörpers einer Verbindungseinrichtung zum lösbaren Festlegen des Funktionsflächenkörpers an einem Basisabschnitt des Boxgehäusekörpers der Anschlussboxeinheit von Fig. 1,
- Fig. 8: eine Vorderansicht des Verbindungskörpers,
- Fig. 9: eine Seitenansicht des Verbindungskörpers,
- Fig. 10: eine gegenüber Fig. 9 um 90° gedrehte Seitenansicht des Verbindungskörpers,
- Fig. 11: eine hälftige Perspektivansicht eines Verbindungsstrukturelements mit einer mit dem Verbindungskörper zusammenwirkenden Verbindungsstruktur,
- Fig. 12: eine Perspektivansicht des Verbindungsstrukturelements,
- Fig. 13: die Schnittansicht von Fig. 4 mit dem Funktionsflächenkörper in einer anderen axialen Positionierung und
- Fig. 14: die Schnittansicht von Fig. 4 mit rückseitig am Basisabschnitt des Boxgehäusekörpers angebrachtem Funktionsflächenkörper.

Die in den Figuren exemplarisch gezeigte Wandeinbau-Anschlussboxeinheit umfasst einen Boxgehäusekörper 1 mit einem rückseitigen Basisabschnitt 2 und einem vom Basisabschnitt 2 nach vorn vorstehenden Hülsenabschnitt 3, einen Funktionsflächenkörper 7, der eine Funktionsfläche 6 aufweist, und eine Verbindungseinrichtung 8, die zum lösbaren Festlegen des Funktionsflächenkörpers 7 am Basisabschnitt 2 in unterschiedlichen axialen Höhen der Funktionsfläche 6 konfiguriert ist. Die Verbindungseinrichtung 8 umfasst mindestens eine Verbindungsstruktur 9 am Basisabschnitt 2 radial außerhalb des Hülsenabschnitts 3 und einen mit der Verbindungsstruktur 9 zusammenwirkenden Verbindungskörper 10, der über eine Betätigungsschnittstelle 11 nutzerbetätigbar relativ zur Verbindungsstruktur 9 und zum Funktionsflächenkörper 7 zwischen einer Löseposition 12 und einer Festlegeposition 13 beweglich angeordnet ist.

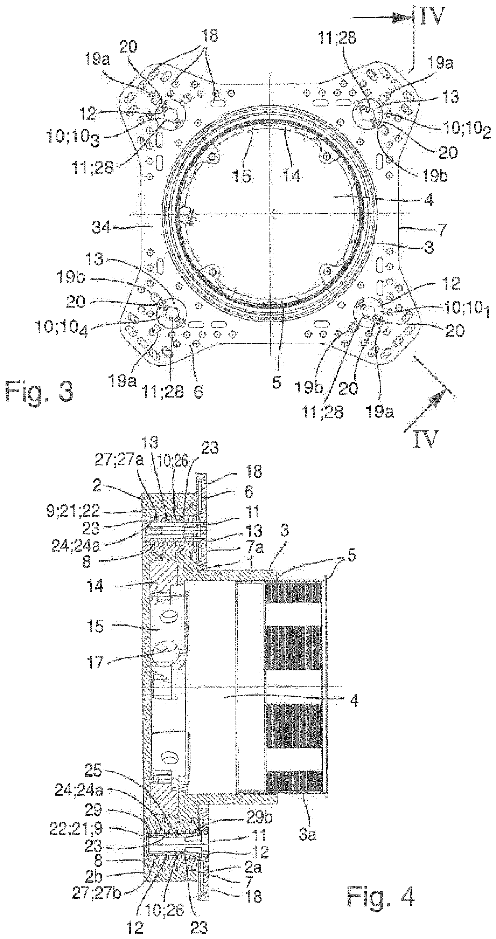

Im gezeigten Beispiel beinhaltet die Verbindungseinrichtung 8 mehrere Verbindungsstrukturen 9 und entsprechend mehrere Verbindungskörper 10, wobei in den Figuren 3 und 4 zur Veranschaulichung ein erster Verbindungskörper 10₁ in der Festlegeposition 13 und ein zweiter Verbindungskörper 10₂ in der Löseposition 12 gezeigt sind. Anders gesagt, umfassen in diesem Beispiel die Verbindungsstruktur 9 und der Verbindungskörper 10 jeweils mehrere getrennte Einzelverbindungstrukturen bzw. Einzelverbindungskörper. Speziell beinhaltet die Anschlussboxeinheit in der gezeigten Ausführung vier gleichartige Verbindungskörper 10, d.h. zusätzlich zum ersten und zweiten Verbindungskörper 10₁, 10₂ einen dritten und einen vierten Verbindungskörper 10₃, 10₄, und entsprechend vier gleichartige Verbindungsstrukturen 9.

Die gezeigte Wandeinbau-Anschlussboxeinheit kann insbesondere als sanitäre Wandeinbau-Anschlussboxeinheit zum Anschließen von Sanitärkomponenten an gebäudeseitige Wasserleitungsanschlüsse konfiguriert sein, wie eingangs erläutert, wobei der Hülsenabschnitt 3 des Boxgehäusekörpers 1 umfangsseitig einen dann als Sanitärkomponenten-Aufnahmeraum konfigurierten Einbaukomponenten-Aufnahmeraum 4 umgibt, der über ein offenes vorderes Stirnende 5 des Hülsenabschnitts 3 zugänglich ist, über das die Einbaukomponente, wie eine Sanitärkomponente, in den Boxgehäusekörper 1 eingebracht werden kann. In alternativen, nicht gezeigten Ausführungsformen ist die Wandeinbau-Anschlussboxeinheit als elektrische Wandeinbau-Anschlussboxeinheit zum Anschließen von elektrischen Komponenten an gebäudeseitige Elektroleitungsanschlüsse konfiguriert, wie ebenfalls eingangs erläutert, wobei dann der Einbaukomponenten-Aufnahmeraum 4 einen Elektrokomponenten-Aufnahmeraum bildet, in den über das offene vordere Stirnende 5 des Hülsenabschnitts 3 die betreffende elektrische Komponente in den Boxgehäusekörper 1 eingebracht werden kann. In entsprechenden Ausführungen ist, wie im gezeigten Beispiel, das offene vordere Stirnende 5 des Hülsenabschnitts 3 gleichzeitig auch das offene vordere Stirnende 5 einer optionalen, am Hülsenabschnitt 3 axial höhenverstellbar gehaltenen bzw. geführten Verlängerungshülse 3a.

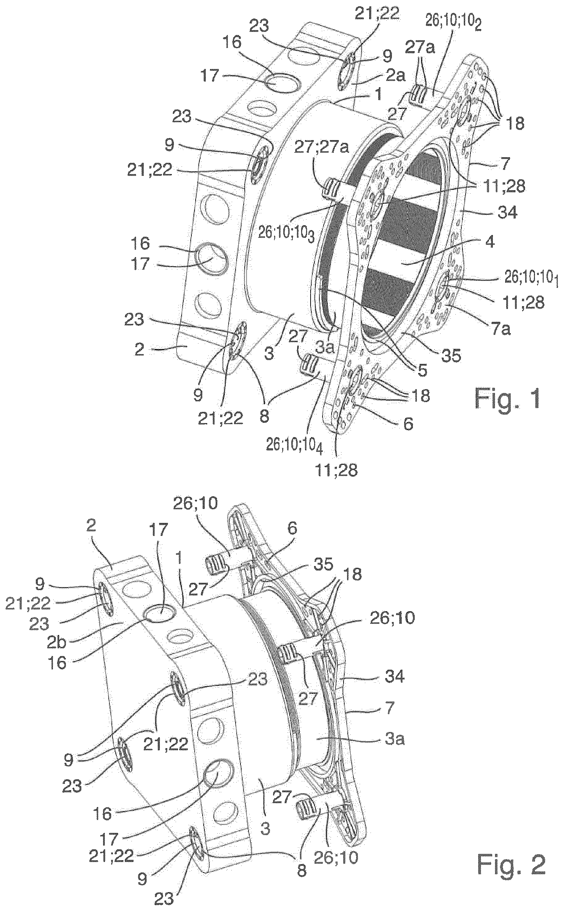

Als fluid- bzw. leitungsverbindendes Bindeglied fungiert ein im Basisabschnitt 2 angeordneter bzw. gehaltener Anschlusskörper 14, der eine dem Einbaukomponenten-Aufnahmeraum 4 zugewandte Einbaukomponenten-Anschlusskontur 15, d.h. im Sanitärfall eine Sanitärkomponenten-Anschlusskontur und im Elektrofall eine Elektrokomponenten-Anschlusskontur, eine an einer Außenseite des Boxgehäusekörpers 1 zugängliche Leitungs-Anschlussschnittstellenstruktur 16, d.h. im Sanitärfall eine Fluidleitungs-Anschlussschnittstellenstruktur und im Elektrofall eine Elektroleitungs-Anschlussschnittstellenstruktur, und im Sanitärfall eine Fluidkanalstruktur 17 zur Fluidverbindung der Fluidleitungs-Anschlussschnittstellenstruktur 16 mit der Sanitärkomponenten-Anschlusskontur 15, im Elektrofall eine elektrisch leitende Verbindung der boxaußenseitigen Elektroleitungs-Anschlussschnittstellenstruktur mit der boxinnenseitigen Elektrokomponenten-Anschlusskontur, aufweist, wie insbesondere aus den Figuren 1 bis 4, 13 und 14 zu erkennen. Anschlusskörper mit derartigen funktionellen Komponenten zur Verwendung in der Sanitär- bzw. Elektroinstallationstechnik sind dem Fachmann an sich bekannt, worauf vorliegend nicht näher eingegangen zu werden braucht.

Der Funktionsflächenkörper 7 stellt mit seiner Funktionsfläche 6 eine Fläche bereit, die im gezeigten Beispiel eine Befestigungsfunktion erfüllt, mittels welcher der Funktionsflächenkörper 7 und dadurch der Boxgehäusekörper 1, an dessen Basisabschnitt 2 der Funktionsflächenkörper 7 lösbar festgelegt werden kann, an einer gebäudeseitigen Wand befestigt werden kann. Im gezeigten Beispiel wird diese Befestigungsfunktion der Funktionsfläche 6 durch eine Mehrzahl von Befestigungsöffnungen 18 unterstützt, mit denen die Funktionsfläche 6 bzw. der Funktionsflächenkörper 7 versehen ist. Alternativ kann der Funktionsflächenkörper 7 so ausgeführt sein, dass er mit seiner Funktionsfläche 6 sowohl eine Befestigungsfunktion als auch eine Dichtfunktion oder nur eine Dichtfunktion erfüllt.

Über die Betätigungsschnittstelle 11 kann der Benutzer den jeweiligen Verbindungskörper 10 zwischen der Löseposition 12 und der Festlegeposition 13 bewegen und dadurch den Funktionsflächenkörper 7 am Basisabschnitt 2 des Boxgehäusekörpers 1 festlegen bzw. zum Lösen wieder freigeben. Die Betätigungsschnittstelle 11 ist zur entsprechenden Betätigung durch den Benutzer eingerichtet.

In einem vorteilhaften Ausführungsaspekt der Anschlussboxeinheit befindet sich die Betätigungsschnittstelle 11 des Verbindungskörpers 10, wie im gezeigten Ausführungsbeispiel, auf einer dem Basisabschnitt 2 des Boxgehäusekörpers 1 abgewandten Seite 7a des Funktionsflächenkörpers 7. Dies ermöglicht dem Benutzer die Bewegungsbetätigung des Verbindungskörpers 10 ungehindert vom Basisabschnitt 2 von dieser Seite 7a her, die für ihn in der Regel auch dann noch zugänglich ist, wenn sich die Anschlussboxeinheit bereits in Montageposition an oder in einer Gebäudewand befindet.

In einem weiteren vorteilhaften Ausführungsaspekt der Erfindung ist der Verbindungskörper 10, wie im gezeigten Ausführungsbeispiel, zwischen der Löseposition 12 und der Festlegeposition 13 drehbeweglich. Optional sind, wie im gezeigten Beispiel, die Löseposition 12 durch die figürliche Darstellung eines ausgeschwenkten Verriegelungsschlosses 19a und die Festlegeposition 13 durch die figürliche Darstellung eines eingeschwenkten Verriegelungsschlosses 19b am Funktionsflächenkörper 7 benachbart zum jeweiligen Verbindungskörper 10 an Markierungspositionen symbolisiert, an denen sich in der Löseposition 12 bzw. der Festlegeposition 13 eine korrespondierende Drehstellungsmarkierung 20 des Verbindungskörpers 10 befindet, wie in Fig. 3 explizit angegeben. Dies erleichtert dem Benutzer die Erkennung, in welcher Position sich der Verbindungskörper 10 aktuell befindet.

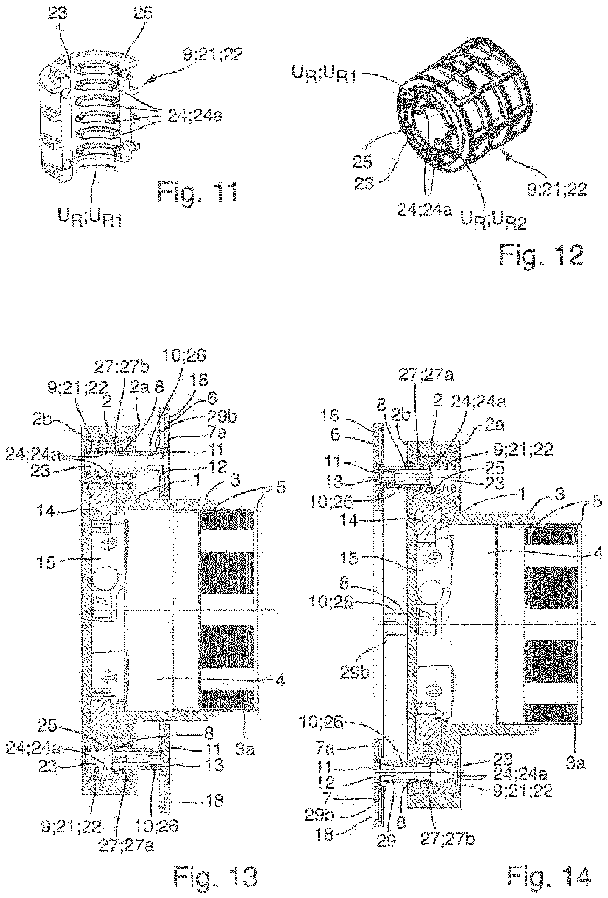

In einem weiteren vorteilhaften Ausführungsaspekt der Erfindung ist die Verbindungseinrichtung 8, wie im gezeigten Ausführungsbeispiel, zum wahlweisen lösbaren Festlegen des Funktionsflächenkörpers 7 vor einer Vorderseite 2a oder hinter einer Rückseite 2b des Basisabschnitts 2 des Boxgehäusekörpers 1 konfiguriert. In den Ansichten der Fig. 4 und 13 ist das Festlegen des Funktionsflächenkörpers 7 vor der Vorderseite 2a gezeigt, in der Ansicht von Fig. 14 das Festlegen des Funktionsflächenkörpers 7 hinter der Rückseite 2b des Basisabschnitts 2 des Boxgehäusekörpers 1. Speziell zeigen Fig. 4 eine vorderseitige Montage des Funktionsflächenkörpers 7 direkt an der Vorderseite 2a des Basisabschnitts 2, d.h. mit minimalem axialem Null-Abstand vom Basisabschnitt 2 nach vorn, und Fig. 13 eine vorderseitige Montage des Funktionsflächenkörpers 7 mit demgegenüber größerem axialem Abstand vom Basisabschnitt 2 nach vorn, während Fig. 14 eine rückseitige Montage des Funktionsflächenkörpers 7 mit etwa dem gleichen axialen Abstand vom Basisabschnitt 2 wie im Fall von Fig. 13 nach hinten zeigt.

Des Weiteren sind beim gezeigten Beispiel durch die entsprechende Ausführung der Verbindungseinrichtung 8 noch mehrere andere, nicht gezeigte Montagepositionen für den Funktionsflächenkörper 7 in gestuft unterschiedlichen axialen Höhen bezogen auf den Boxgehäusekörper 1 möglich. Die Verbindungseinrichtung 8 ist in entsprechenden Ausführungen je nach Bedarf zur stufenlosen oder wie im gezeigten Beispiel mehrstufigen Einstellbarkeit der axialen Höhe des Funktionsflächenkörpers 7 bzgl. des Boxgehäusekörpers 1 eingerichtet. Vorzugsweise ist die Verbindungseinrichtung 8, wie im gezeigten Beispiel, so ausgeführt, dass der Funktionsflächenkörper 7 sowohl bei vorderseitiger als auch bei rückseitiger Montage am Boxgehäusekörper 1 jeweils in mehreren verschiedenen axialen Höhen seiner Funktionsfläche 6 am Basisabschnitt 2 festlegbar ist, in alternativen Ausführungen ist er bei rückseitiger oder bei vorderseitiger Montage nur in einer einzigen axialen Höhe festlegbar.

Während beim gezeigten Ausführungsbeispiel die Erfindungsaspekte, dass sich die Betätigungsschnittstelle 11 des Verbindungskörpers 10 auf der dem Basisabschnitt 2 abgewandten Seite 7a des Funktionsflächenkörpers 7 befindet, dass der Verbindungskörper 10 zwischen der Löseposition 12 und der Festlegeposition 13 drehbeweglich ist und dass die Verbindungseinrichtung 8 zum wahlweisen vorderseitigen oder rückseitigen Festlegen des Funktionsflächenkörpers 7 bezüglich des Basisabschnitts 2 konfiguriert ist, sämtlich in Kombination verwirklicht sind, sind in alternativen Ausführungen nur einer oder zwei dieser Erfindungsaspekte verwirklicht. Dies ist problemlos möglich, da sich diese Aspekte nicht zwingend gegenseitig bedingen, wenngleich eine Kombination zweier oder aller drei Aspekte zu spezifischen Vorteilen führen kann. Beispielsweise kann sich in entsprechenden alternativen Ausführungen der Erfindung die Betätigungsschnittstelle 11 des Verbindungskörpers 10 auf einer dem Basisabschnitt 2 des Boxgehäusekörpers 1 zugewandten Seite des Funktionsflächenkörpers 7 oder seitlich radial außen in Bezug auf den Basisabschnitt 2 befinden, und/oder der Verbindungskörper 10 ist zwischen der Löseposition 12 und der Festlegeposition 13 rein translatorisch beweglich, z.B. nur axial oder kombiniert axial und radial, und/oder die Verbindungseinrichtung 8 ist so ausgeführt, dass Festlegen der Funktionsflächenkörper 7 nur an der Vorderseite oder nur an der Rückseite des Basisabschnitts 2 festlegbar ist.

In entsprechenden Ausführungen ist die mindestens eine Verbindungsstruktur 9 bzw. die jeweilige Verbindungsstruktur 9, wie im gezeigten Beispiel, von einem im Basisabschnitt 2 des Boxgehäusekörpers 1 angeordneten Verbindungsstrukturelement 21 gebildet. In alternativen Ausführungen kann die Verbindungsstruktur 9 z.B. direkt am Basisabschnitt 2 angeformt sein.

In vorteilhaften Ausführungen beinhaltet das Verbindungsstrukturelement 21, wie im gezeigten Beispiel, ein sich zwischen der Vorderseite 2a und der Rückseite 2b des Basisabschnitts 2 des Boxgehäusekörpers 1 durchgehend durch den Basisabschnitt 2 hindurch erstreckendes Hülsenelement 22, wie insbesondere aus den Fig. 1, 2, 4 und 11 bis 14 ersichtlich. Alternativ kann das Verbindungsstrukturelement 21 z.B. einen von der Vorderseite 2a des Basisabschnitts 2 des Boxgehäusekörpers 1 nach vorn und/oder einen von der Rückseite 2b des Basisabschnitts 2 nach hinten abstehenden Verbindungsstutzen beinhalten, an dem die Verbindungsstruktur 9 ausgebildet ist.

In entsprechenden Ausführungen beinhaltet die mindestens eine Verbindungsstruktur 9, wie beim gezeigten Ausführungsbeispiel, eine Bolzenaufnahmeöffnung 23 mit einem ein Rastprofil 24 aufweisenden Öffnungsrand 25, wie insbesondere aus den Fig. 4 und 11 bis 14 ersichtlich. Korrespondierend dazu weist der Verbindungskörper 10 in diesem Fall einen in die Bolzenaufnahmeöffnung 23 einsteckbaren und in der Bolzenaufnahmeöffnung 23 zwischen der Löseposition 12 und der Festlegeposition 13 verdrehbaren Verbindungsbolzen 26 auf, der umfangsseitig ein Gegenrastprofil 27 beinhaltet, wie insbesondere aus den Fig. 1, 2, 4, 7 bis 10, 13 und 14 ersichtlich. Das Rastprofil 24 und das Gegenrastprofil 27 wirken in der Festlegeposition 13 des Verbindungsbolzens 26 gegen axiales Herausbewegen des Verbindungsbolzens 26 aus der Bolzenaufnahmeöffnung 23 verriegelnd zusammen und geben in der Löseposition 12 des Verbindungsbolzens 26 ein axiales Herausbewegen des Verbindungsbolzens 26 aus der Bolzenaufnahmeöffnung 23 frei. In alternativen Ausführungen können z.B. in technischer Umkehrung die jeweilige Verbindungsstruktur 9 als Verbindungsstutzen oder Verbindungsbolzen nach Art des Verbindungsbolzens 26 und der jeweilige Verbindungskörper 10 mit einer Stutzen- oder Bolzenaufnahmeöffnung nach Art der Bolzenaufnahmeöffnung 23 gebildet sein.

In entsprechenden Ausführungen beinhaltet die Betätigungsschnittstelle 11 des Verbindungskörpers 10, wie im gezeigten Beispiel, eine stirnseitige Werkzeugschnittstelle 28 des Verbindungsbolzens 26. Je nach Bedarf ist die Werkzeugschnittstelle 28 nur an einem oder wie im gezeigten Beispiel an beiden Stirnseiten des Verbindungsbolzens 26 vorgesehen. Konkret ist die Werkzeugschnittstelle 28 beim gezeigten Beispiel von einer sich durchgehend zwischen den beiden Stirnseiten durch den Verbindungsbolzen 26 hindurch erstreckenden Mehrkantöffnung, wie einer herkömmlichen Innensechskantöffnung, gebildet, in die über jede der beiden Stirnseiten des Verbindungsbolzens 26 ein passendes Mehrkant-Drehwerkzeug, z.B. ein Schraubendreher oder ein Innensechskantschlüssel, eingesteckt werden kann, um den Verbindungsbolzen 26 in der Bolzenaufnahmeöffnung 23 zu verdrehen.

In entsprechenden Ausführungen beinhaltet das Rastprofil 24, wie im gezeigten Beispiel, einen oder mehrere axial voneinander beabstandete Raststege 24a, die sich jeweils innerhalb eines Raststeg-Umfangssektors U_{R} der Bolzenaufnahmeöffnung 23 erstrecken. Passend dazu beinhaltet das Gegenrastprofil 27 in diesem Fall einen oder mehrere axial voneinander beabstandete Gegenraststege 27a, die sich jeweils innerhalb eines Gegenraststeg-Umfangssektors U_{G} erstrecken. Speziell beinhaltet im gezeigten Beispiel das Rastprofil 24 jeweils sechs axial voneinander beabstandete Raststege 24a auf zwei gegenüberliegenden Umfangssektorbereichen U_{R1}, U_{R2}, die sich jeweils über einen Umfangswinkelbereich von ca. 60° bis 90° erstrecken und zusammen den Raststeg-Umfangssektor U_{R} bilden, während passend dazu das Gegenrastprofil 27 jeweils zwei axial voneinander beabstandete Gegenraststege 27a an zwei gegenüberliegenden, außenseitigen Umfangssektorbereichen U_{G1}, U_{G2} beinhaltet, die zusammen den Gegenraststeg-Umfangssektor U_{G} bilden und sich jeweils über einen Umfangswinkelbereich von ca. 60° bis 90° erstrecken.

Somit lässt sich zur Montage des Funktionsflächenkörpers 7 am Basisabschnitt 2 des Boxgehäusekörpers 1 beim gezeigten Beispiel der jeweilige Verbindungsbolzen 26 in seiner der Löseposition 12 entsprechenden Löseposition-Drehstellung axial in die Bolzenaufnahmeöffnung 23 des zugehörigen Hülsenelements 22 einfügen, wobei die Gegenraststege 27a in den beiden Umfangswinkelbereichen zwischen den Umfangssektorbereichen U_{R1}, U_{R2} an den Raststegen 24a axial vorbeibewegt werden. Sobald sich der Verbindungsbolzen 26 in der gewünschten axialen Höhe befindet, wird er von der Löseposition 12 in die Festlegeposition 13 um einen zugehörigen Festlegewinkel von z.B. ca. 60° bis 90° gedreht, wobei sich die Gegenraststege 27a in die Zwischenräume axial zwischen den Raststegen 24a hineinbewegen und dadurch gegen Axialbewegungen des Verbindungsbolzens 26 in der Bolzenaufnahmeöffnung 23 verrastend sichernd bzw. verriegelnd zusammenwirken.

In alternativen Ausführungen beinhaltet das Rastprofil 24 nur einen oder zwischen zwei und fünf oder mehr als sechs axial beabstandet angeordnete Raststege 24a, und/oder das Gegenrastprofil 27 beinhaltet nur einen oder mehr als zwei axial voneinander beabstandete Gegenraststege 27a. Bei Bedarf kann vorgesehen sein, eine Mehrzahl von Hülsenelementen 22 unterschiedlicher axialer Länge und/oder eine Mehrzahl von Verbindungsbolzen 26 unterschiedlicher axialer Länge bereitzustellen, um dann jeweils ein passendes Hülsenelement 22 bzw. einen passenden Verbindungsbolzen 26 abhängig von der im konkreten Fall gewünschten axialen Höhe der Funktionsfläche 6 des am Basisabschnitt 2 zu montierenden Funktionsflächenkörpers 7 auszuwählen.

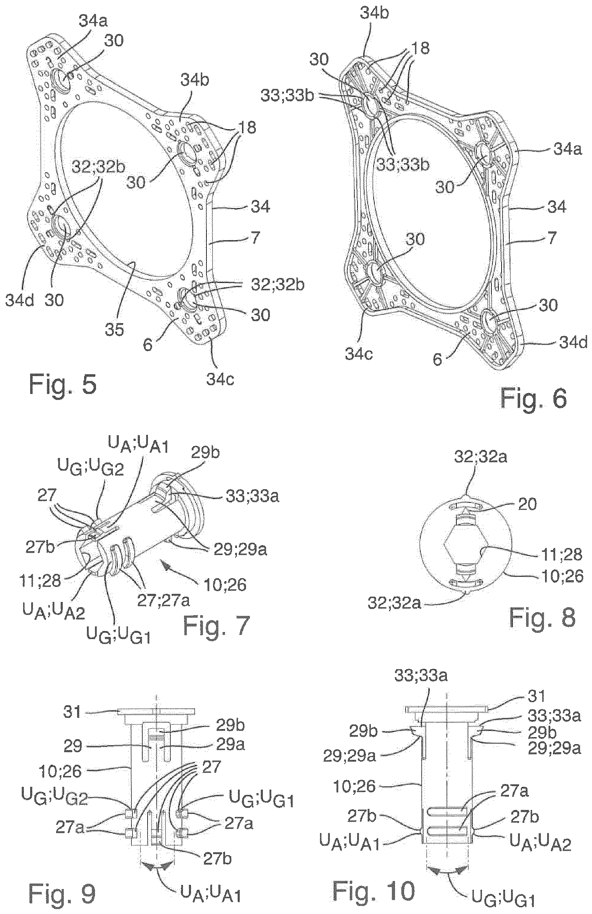

In vorteilhaften Ausführungen beinhaltet das Rastprofil 24 außerhalb des Raststeg-Umfangssektors U_{R} und/oder das Gegenrastprofil 27 außerhalb des Gegenraststeg-Umfangssektors U_{G} mindestens einen Aufraststeg 29 innerhalb eines Aufraststeg-Umfangssektors U_{A}. Speziell beinhaltet beim gezeigten Beispiel das am Verbindungsbolzen 26 ausgebildete Gegenrastprofil 27 je einen Aufraststeg 27b innerhalb jedes von zwei sich gegenüberliegenden Aufraststeg-Umfangssektorbereichen U_{A1}, U_{A2}, die zusammen den Aufraststeg-Umfangssektor U_{A} bilden und sich jeweils in einem der beiden Umfangswinkelbereiche zwischen den beiden Gegenraststeg-Umfangssektorbereichen U_{G1}, U_{G2} erstrecken, wie insbesondere aus den Fig. 7, 9 und 10 ersichtlich.

Beim axialen Einfügen des Verbindungsbolzens 26 in seiner Löseposition-Drehstellung in die Bolzenaufnahmeöffnung 23 überlappt der Aufraststeg-Umfangssektor U_{A} mit dem Raststeg-Umfangssektor U_{R}, so dass der Aufraststeg 27b federelastisch radial nachgebend auf das Rastprofil 24 aufrastet, d.h. an dessen axialer Reihe von Raststegen 24a entlangrastet, bis der Verbindungsbolzen 26 eine gewünschte axiale Höhe erreicht hat und der Benutzer das axiale Vorschieben des Verbindungsbolzens 26 beendet. Der Aufraststeg 27b hält dann im Zusammenwirken mit den beiden jeweils axial benachbarten Raststegen der betreffenden axialen Reihe von Raststegen 24a den Verbindungsbolzen 26 vorfixiert in dieser axialen Position, und der Benutzer kann den Verbindungsbolzen 26 von der Löseposition 12 in die Festlegeposition 13 drehen, ohne ihn dabei in seiner axialen Lage von Hand festhalten zu müssen. In der Festlegeposition 13 ist er dann wie erläutert durch das Zusammenwirken der Raststege 24a mit den Gegenraststegen 27 in axialer Richtung in der Bolzenaufnahmeöffnung 23 fixiert.

Analog lässt sich der Verbindungsbolzen 26 nach Zurückdrehen in seine Löseposition 12 vom Benutzer zum Lösen oder zwecks axialer Höhenverstellung axial aus der Bolzenaufnahmeöffnung 23 heraus oder weiter in diese hinein bewegen, wobei der Aufraststeg 27b in beiden axialen Bewegungsrichtungen federelastisch radial nachgebend mit den Raststegen 24a zusammenwirkt und dadurch diese Bewegung in beide Richtungen zulässt ohne zu blockieren.

In entsprechenden Ausführungen beinhaltet die Anschlussboxeinheit, wie im gezeigten Beispiel, eine Verliersicherung 29, die den Verbindungskörper 10 verliersicher am Funktionsflächenkörper 7 vormontiert hält. Im gezeigten Beispiel umfasst die Verliersicherung 29 zwei umfangsseitig auf gegenüberliegenden Seiten am Verbindungsbolzen 26 ausgebildete Rastfederzungen 29a mit je einem radial nach außen abstehenden Rastnocken 29b, wie insbesondere aus den Fig. 7, 9 und 10 ersichtlich. Die Rastnocken sind zum Hintergreifen eines Öffnungsrandes einer Verbindungskörper-Durchführungsöffnung 30 eingerichtet, die am Funktionsflächenkörper 7 ausgebildet ist, um den Verbindungskörper 10 durch diese hindurchstecken zu können, wie insbesondere aus den Fig. 5 und 6 ersichtlich. Dabei kommt der Verbindungskörper 10 bzw. der Verbindungsbolzen 26 mit einem verbreiterten Kopfteil 31 vorderseitig zur Anlage gegen den Rand der Verbindungskörper-Durchführungsöffnung 30 und hinterrastet diesen Öffnungsrand mit den in radialer Richtung federelastisch nachgiebigen Rastnocken 29b. Dadurch ist der Verbindungskörper 10 bzw. Verbindungsbolzen 26 locker und drehbeweglich verliersicher am Funktionsflächenkörper 7 vormontiert gehalten.

In vorteilhaften Ausführungen beinhaltet die Anschlussboxeinheit, wie im gezeigten Beispiel, eine Endlagenrastung 32, die den Verbindungskörper 10 bzw. Verbindungsbolzen 26 in der Festlegeposition 13 ausrastbar am Funktionsflächenkörper 7 verrastet. Speziell umfasst beim gezeigten Beispiel die Endlagenrastung 32 je zwei umfangsseitig am Kopfteil 31 des Verbindungsbolzens 26 ausgebildete Rastnasen 32a und korrespondierende Rastausnehmungen 32b am Öffnungsrand der jeweiligen Verbindungskörper-Durchführungsöffnung 30 des Funktionsflächenkörpers 7, wie insbesondere aus den Fig. 5 und 8 ersichtlich. Die Endlagenrastung 32 beugt einem unbeabsichtigten Herausgelangen bzw. Zurückdrehen des Verbindungsbolzens 26 aus der Festlegeposition 13 in Richtung Löseposition 12 vor. Andererseits ist die Endlagenrastung 32 derart konfiguriert, dass der Verbindungskörper 10 bzw. Verbindungsbolzen 26 durch eine geringe Drehkraft vom Benutzer ausgerastet werden kann, wenn der Benutzer den Verbindungskörper 7 bzw. Verbindungsbolzen 26 von seiner Festlegeposition 13 in seine Löseposition 12 verbringen will.

In vorteilhaften Ausführungen beinhaltet die Anschlussboxeinheit, wie im gezeigten Ausführungsbeispiel, eine Verdrehsicherung 33, die korrespondierende Endlagenanschläge 33a, 33b am Verbindungskörper 10 bzw. Verbindungsbolzen 26 einerseits und am Funktionsflächenkörper 7 oder an der Verbindungsstruktur 9 andererseits umfasst. Im gezeigten Beispiel beinhaltet die Verdrehsicherung 33 zum einen Anschlagnasen 33a am Verbindungsbolzen 26, wobei die Anschlagnasen 33a vorzugsweise von den Rastnocken 29b gebildet sein können, und zum anderen Öffnungsrandabsätze 33b am Öffnungsrand der jeweiligen Verbindungskörper-Durchführungsöffnung 30 des Funktionsflächenkörpers 7, gegen welche die jeweilige Anschlagnase 33a zur Anlage kommt, wenn der Verbindungsbolzen 26 in seine Löseposition 12 oder in seine Festlegeposition 13 gedreht wird,.

In entsprechenden Ausführungen beinhaltet der Funktionsflächenkörper 7, wie im gezeigten Beispiel, einen geschlossenen Ringkörper 34 mit einer Hülsenabschnitt-Durchführungsöffnung 35 und der bereits erwähnten, mindestens einen Verbindungskörper-Durchführungsöffnung 30, wie insbesondere aus den Fig. 1 bis 3, 5 und 6 ersichtlich. Zur Montage wird der Ringkörper 34 von vorne auf den Boxgehäusekörper 1 aufgeschoben, wobei dessen Hülsenabschnitt 3 die Hülsenabschnitt-Durchführungsöffnung 35 passieren kann, so dass der Ringkörper 34 den Hülsenabschnitt 3 geschlossen umgibt. Im gezeigten Beispiel besitzt der Ringkörper 34 vier Verbindungskörper-Durchführungsöffnungen 30 im Umfangswinkelabstand von jeweils ca. 90°, wobei der Ringkörper 34 in den betreffenden Bereichen mit sich radial nach außen erstreckenden Fortsätzen 34a, 34b, 34c, 34d versehen ist, in denen auch die bereits oben erwähnten Befestigungsöffnungen 18 ausgebildet sind.

In vorteilhaften Ausführungen sind, wie beim gezeigten Beispiel, der Hülsenabschnitt 3 und der Basisabschnitt 2 des Boxgehäusekörpers 1 einteilig aus einem Kunststoffschaummaterial gebildet, wobei die Verbindungsstruktur 9 am Basisabschnitt 2 angeformt oder das Verbindungsstrukturelement 21 in das Kunststoffschaummaterial des Basisabschnitts 2 eingebettet ist. Insbesondere kann das Hülsenelement 22 bei der Herstellung des Boxgehäusekörpers in einem einzigen Fertigungsprozess in das Kunststoffschaummaterial des Basisabschnitts 2 eingebettet bzw. umfangsseitig von diesem umschäumt werden. Zu diesem Zweck kann es nützlich sein, das Hülsenelement 22 aus zwei Halbschalen vorzufertigen, von denen die eine in Fig. 11 separat gezeigt ist, und die beiden Halbschalen zum Hülsenelement 22 zusammenzufügen, bevor dieses dann in das Kunststoffschaummaterial eingebettet wird. In alternativen Ausführungen besteht der Boxgehäusekörper 1 nicht aus einem Kunststoffschaummaterial, sondern beispielsweise aus einem demgegenüber steiferen Kunststoffmaterial.

Das Hülsenelement 22 bzw. das Verbindungsstrukturelement 21 kann in diesem wie auch in anderen Fällen z.B. aus einem harten, biegesteifen Kunststoffmaterial oder einem Metallmaterial gebildet sein. Wenn der Basisabschnitt 2 des Boxgehäusekörpers 1 aus einem steifen Kunststoff- oder Metallmaterial gebildet ist, kann die Verbindungsstruktur 9 auch direkt als in den Basisabschnitt 2 integrierte Struktur realisiert sein. Ebenso können der Verbindungskörper 10 und der Funktionsflächenkörper 7 je nach Bedarf und Anwendungsfall aus einem beliebigen Kunststoff- oder Metallmaterial gebildet sein. Gleiches gilt für den Anschlusskörper 14.

Wie die gezeigten und die weiteren oben erläuterten Ausführungsbeispiele deutlich machen, stellt die Erfindung eine Wandeinbau-Anschlussboxeinheit zur Verfügung, die besondere funktionelle Vorteile und/oder Vorteile hinsichtlich Fertigungs- und/oder Montageaufwand bietet, speziell was die flexible Verwendbarkeit der Anschlussboxeinheit aufgrund der variablen Festlegbarkeit des Funktionsflächenkörpers am Boxgehäusekörper und/oder die Realisierung der Verbindungseinrichtung zum lösbaren Festlegen des Funktionsflächenkörpers am Basisabschnitt des Boxgehäusekörpers angeht.

Die Anschlussboxeinheit lässt sich besonders vorteilhaft als sanitäre Wandeinbau-Anschlussboxeinheit in der Sanitärinstallationstechnik und als elektrische Wandeinbau-Anschlussboxeinheit in der Elektroinstallationstechnik im Zusammenhang mit dem Einbau von Sanitär- bzw. Elektrokomponenten, sei es in Unterputz- oder Aufputzausführung, an einer Seiten-, Decken- oder Bodenwand eines Sanitärraums oder einer Küche oder eines anderen Raums bzw. Zimmers in einem Gebäude verwenden.

## Patentansprüche

1. Wandeinbau-Anschlussboxeinheit mit
- einem Boxgehäusekörper (1) mit einem rückseitigen Basisabschnitt (2) und einem vom Basisabschnitt nach vorn vorstehenden Hülsenabschnitt (3), der umfangsseitig einen Einbaukomponenten-Aufnahmeraum (4) umgibt, der über ein offenes vorderes Stirnende (5) des Hülsenabschnitts zugänglich ist,
- einem eine Funktionsfläche (6) aufweisenden Funktionsflächenkörper (7) und
- einer Verbindungseinrichtung (8), die zum lösbaren Festlegen des Funktionsflächenkörpers am Basisabschnitt in unterschiedlichen axialen Höhen der Funktionsfläche konfiguriert ist und mindestens eine Verbindungsstruktur (9) am Basisabschnitt radial außerhalb des Hülsenabschnitts und einen mit der Verbindungsstruktur zusammenwirkenden Verbindungskörper (10) umfasst, der über eine Betätigungsschnittstelle (11) nutzerbetätigbar relativ zur Verbindungsstruktur und zum Funktionsflächenkörper zwischen einer Löseposition (12) und einer Festlegeposition (13) beweglich angeordnet ist,
**dadurch gekennzeichnet, dass**
- sich die Betätigungsschnittstelle (11) des Verbindungskörpers (10) auf einer dem Basisabschnitt (2) des Boxgehäusekörpers (1) abgewandten Seite (7a) des Funktionsflächenkörpers (7) befindet.

2. Wandeinbau-Anschlussboxeinheit nach Anspruch 1, weiter **dadurch gekennzeichnet, dass**
- der Verbindungskörper (10) zwischen der Löseposition (12) und der Festlegeposition (13) drehbeweglich ist und/oder
- die Verbindungseinrichtung (8) zum wahlweisen lösbaren Festlegen des Funktionsflächenkörpers (7) vor einer Vorderseite (2a) oder hinter einer Rückseite (2b) des Basisabschnitts (2) des Boxgehäusekörpers (1) konfiguriert ist.

3. Wandeinbau-Anschlussboxeinheit nach Anspruch 1 oder 2, weiter **dadurch gekennzeichnet, dass** die mindestens eine Verbindungsstruktur von einem im Basisabschnitt des Boxgehäusekörpers angeordneten Verbindungsstrukturelement (21) gebildet ist.

4. Wandeinbau-Anschlussboxeinheit nach Anspruch 3, weiter **dadurch gekennzeichnet, dass** das Verbindungsstrukturelement ein sich zwischen einer Vorderseite (2a) und einer Rückseite (2b) des Basisabschnitts durchgehend durch den Basisabschnitt hindurch erstreckendes Hülsenelement (22) beinhaltet.

5. Wandeinbau-Anschlussboxeinheit nach einem der Ansprüche 1 bis 4, weiter **dadurch gekennzeichnet, dass** die mindestens eine Verbindungsstruktur eine Bolzenaufnahmeöffnung (23) mit einem ein Rastprofil (24) aufweisenden Öffnungsrand (25) beinhaltet und der Verbindungskörper einen in die Bolzenaufnahmeöffnung einsteckbaren und in der Bolzenaufnahmeöffnung zwischen der Löseposition und der Festlegeposition verdrehbaren Verbindungsbolzen (26) beinhaltet, der umfangsseitig ein Gegenrastprofil (27) aufweist, wobei das Rastprofil und das Gegenrastprofil in der Festlegeposition des Verbindungsbolzens gegen axiales Herausbewegen des Verbindungsbolzens aus der Bolzenaufnahmeöffnung verriegelnd zusammenwirken und in der Löseposition des Verbindungsbolzens ein axiales Herausbewegen des Verbindungsbolzens aus der Bolzenaufnahmeöffnung freigeben.

6. Wandeinbau-Anschlussboxeinheit nach Anspruch 5, weiter **dadurch gekennzeichnet, dass** die Betätigungsschnittstelle des Verbindungskörpers eine stirnseitige Werkzeugschnittstelle (28) des Verbindungsbolzens beinhaltet.

7. Wandeinbau-Anschlussboxeinheit nach Anspruch 5 oder 6, weiter **dadurch gekennzeichnet, dass** das Rastprofil einen oder mehrere axial voneinander beabstandete Raststege (24a) beinhaltet, die sich jeweils innerhalb eines Raststeg-Umfangssektors (U_{R}) der Bolzenaufnahmeöffnung erstrecken, und das Gegenrastprofil einen oder mehrere axial voneinander beabstandete Gegenraststege (27a) beinhaltet, die sich jeweils innerhalb eines Gegenraststeg-Umfangssektors (U_{G}) erstrecken.

8. Wandeinbau-Anschlussboxeinheit nach einem der Ansprüche 5 bis 7, weiter **dadurch gekennzeichnet, dass** das Rastprofil außerhalb des Raststeg-Umfangssektors und/oder das Gegenrastprofil außerhalb des Gegenraststeg-Umfangssektors mindestens einen Aufraststeg (27b) innerhalb eines Aufraststeg-Umfangssektors (U_{A}) beinhaltet.

9. Wandeinbau-Anschlussboxeinheit nach einem der Ansprüche 1 bis 8, weiter **gekennzeichnet durch** eine Verliersicherung (29), die den Verbindungskörper verliersicher am Funktionsflächenkörper vormontiert hält.

10. Wandeinbau-Anschlussboxeinheit nach einem der Ansprüche 1 bis 9, weiter **gekennzeichnet durch** eine Endlagenrastung (32), die den Verbindungskörper in der Festlegeposition ausrastbar am Funktionsflächenkörper verrastet.

11. Wandeinbau-Anschlussboxeinheit nach einem der Ansprüche 2 bis 10, weiter **gekennzeichnet durch** eine Verdrehsicherung (33), die korrespondierende Endlagenanschläge (33a, 33b) am drehbeweglichen Verbindungskörper einerseits und am Funktionsflächenkörper oder an der Verbindungsstruktur andererseits umfasst.

12. Wandeinbau-Anschlussboxeinheit nach einem der Ansprüche 1 bis 11, weiter **dadurch gekennzeichnet, dass** der Funktionsflächenkörper einen geschlossenen Ringkörper (34) mit einer Hülsenabschnitt-Durchführungsöffnung (35) und mindestens einer Verbindungskörper-Durchführungsöffnung (30) beinhaltet.

13. Wandeinbau-Anschlussboxeinheit nach einem der Ansprüche 1 bis 12, weiter **dadurch gekennzeichnet, dass** der Hülsenabschnitt und der Basisabschnitt des Boxgehäusekörpers einteilig aus einem Kunststoffschaummaterial gebildet sind, wobei die Verbindungsstruktur am Basisabschnitt angeformt ist.

14. Wandeinbau-Anschlussboxeinheit nach einem der Ansprüche 3 bis 13, weiter **dadurch gekennzeichnet, dass** der Hülsenabschnitt und der Basisabschnitt des Boxgehäusekörpers einteilig aus einem Kunststoffschaummaterial gebildet sind, wobei das Verbindungsstrukturelement in das Kunststoffschaummaterial des Basisabschnitts eingebettet ist.

## Claims

1. Wall installation connection box unit, comprising
- a box housing body (1) having a rear-side base portion (2) and a sleeve portion (3) projecting forward from the base portion, which sleeve portion peripherally surrounds an installation component mounting space (4), which space is accessible via an open front end face (5) of the sleeve portion,
- a functional surface body (7) including a functional surface (6), and
- a connection device (8) which is configured for releasable fastening of the functional surface body to the base portion in different axial levels of the functional surface and comprises at least one connection structure (9) on the base portion radially outside the sleeve portion and a connection body (10) cooperating with the connection structure, which connection body is user-operable via an actuation interface (11) to be movable relative to the connection structure and to the functional surface body between a released position (12) and a fastened position (13),
**characterized in that**
- the operation interface (11) of the connection body (10) is located on a side (7a) of the functional surface body (7) facing away from the base portion (2) of the box housing body (1).

2. Wall installation connection box unit according to claim 1, further **characterized in that**
- the connection body (10) is rotatable between the released position (12) and the fastened position (13), and/or
- the connection device (8) is configured for selective releasable fastening of the functional surface body (7) in front of a front side (2a) or behind a rear side (2b) of the base portion (2) of the box housing body (1).

3. Wall installation connection box unit according to claim 1 or 2, further **characterized in that** the at least one connection structure is a connection structure element (21) disposed in the base portion of the box housing body.

4. Wall installation connection box unit according to claim 3, further **characterized in that** the connection structure element includes a sleeve element (22) extending continuously through the base portion between a front side (2a) and a rear side (2b) of the base portion.

5. Wall installation connection box unit according to any one of claims 1 to 4, further **characterized in that** the at least one connection structure includes a bolt mounting opening (23) having an opening edge (25) which includes a locking profile (24), and the connection body includes a connection bolt (26) insertable into the bolt mounting opening and turnable within the bolt mounting opening between the released position and the fastened position, which bolt has a counter-locking profile (27) on its peripheral side, wherein the locking profile and the counter-locking profile in the fastened position of the connection bolt cooperate in a locking manner to prevent axial removal of the connection bolt from the bolt mounting opening and in the released position of the connection bolt enable axial removal of the connection bolt from the bolt mounting opening.

6. Wall installation connection box unit according to claim 5, further **characterized in that** the actuation interface of the connection body includes a tool interface (28) on an end face of the connection bolt.

7. Wall installation connection box unit according to claim 5 or 6, further **characterized in that** the locking profile includes one or more locking bars (24a) axially spaced from each other, which bars each extend within a locking bar circumferential sector (U_{R}) of the bolt mounting opening, and the counter-locking profile includes one or more counter-locking bars (27a) axially spaced from each other, which bars each extend within a counter-locking bar circumferential sector (U_{G}).

8. Wall installation connection box unit according to any one of claims 5 to 7, further **characterized in that** the locking profile beyond the locking bar circumferential sector and/or the counter-locking profile beyond the counter-locking bar circumferential sector include at least one snap-on bar (27b) within a snap-on bar circumferential sector (U_{A}).

9. Wall installation connection box unit according to any one of claims 1 to 8, further **characterized by** a captive securing element (29) which retains the connection body captive on the functional surface body in the preassembled state.

10. Wall installation connection box unit according to any one of claims 1 to 9, further **characterized by** an end position detent (32) which locks the connection body in the fastened position on the functional surface body in an unlockable manner.

11. Wall installation connection box unit according to any one of claims 2 to 10, further **characterized by** a rotation lock element (33) which comprises corresponding end position stops on the connection body, on the one hand side, and on the functional surface body or on the connection structure, on the other hand side.

12. Wall installation connection box unit according to any one of claims 1 to 11, further **characterized in that** the functional surface body includes a closed annular body (34) with a sleeve portion passage opening (35) and at least one connection body passage opening (30).

13. Wall installation connection box unit according to any one of claims 1 to 12, further **characterized in that** the sleeve portion and the base portion of the box housing body are integrally formed from a synthetic foamed material, wherein the connection structure is moulded to the base portion.

14. Wall installation connection box unit according to any one of claims 3 to 13, further **characterized in that** the sleeve portion and the base portion of the box housing body are integrally formed from a synthetic foamed material, wherein the connection structure element is embedded into the synthetic foamed material of the base portion.

## Revendications

1. Unité de boîtier de raccordement à encastrer dans un mur, comprenant
- un corps de boîtier (1) présentant une portion de base arrière (2) et une portion de douille (3) faisant saillie vers l'avant depuis la portion de base, qui entoure, à la périphérie, un espace de réception (4) de composants encastrés accessible par une extrémité frontale avant ouverte (5) de la portion de douille,
- un corps à surface fonctionnelle (7) présentant une surface fonctionnelle (6), et
- un dispositif de liaison (8) qui est configuré pour immobiliser de manière amovible le corps à surface fonctionnelle sur la portion de base à différentes hauteurs axiales de la surface fonctionnelle et qui comprend au moins une structure de liaison (9) sur la portion de base radialement à l'extérieur de la portion de douille et un corps de liaison (10) coopérant avec la structure de liaison, qui est disposé de manière mobile par rapport à la structure de liaison et au corps à surface fonctionnelle entre une position de libération (12) et une position d'immobilisation (13) par l'intermédiaire d'une interface d'actionnement (11) pouvant être actionnée par l'utilisateur,
**caractérisée en ce que**
- l'interface d'actionnement (11) du corps de liaison (10) se trouve sur une face (7a) du corps à surface fonctionnelle (7) détournée de la portion de base (2) du corps de boîtier (1).

2. Unité de boîtier de raccordement à encastrer dans un mur selon la revendication 1,
**caractérisée en outre en ce que**
- le corps de liaison (10) est mobile en rotation entre la position de libération (12) et la position d'immobilisation (13), et/ou
- le dispositif de liaison (8) est configuré pour immobiliser sélectivement et de manière amovible le corps à surface fonctionnelle (7) en avant d'une face avant (2a) ou en arrière d'une face arrière (2b) de la portion de base (2) du corps de boîtier (1).

3. Unité de boîtier de raccordement à encastrer dans un mur selon la revendication 1 ou 2,
**caractérisée en outre en ce que** ladite au moins une structure de liaison est formée par un élément de structure de liaison (21) disposé dans la portion de base du corps de boîtier.

4. Unité de boîtier de raccordement à encastrer dans un mur selon la revendication 3,
**caractérisée en outre en ce que** l'élément de structure de liaison comprend un élément de douille (22) s'étendant en continu à travers la portion de base entre une face avant (2a) et une face arrière (2b) de la portion de base.

5. Unité de boîtier de raccordement à encastrer dans un mur selon l'une des revendications 1 à 4,
**caractérisée en outre en ce que** ladite au moins une structure de liaison présente une ouverture de réception de boulon (23) ayant un bord d'ouverture (25) présentant un profil d'enclenchement (24), et le corps de liaison comprend un boulon de liaison (26) pouvant être inséré dans l'ouverture de réception de boulon et pouvant tourner dans l'ouverture de réception de boulon entre la position de libération et la position d'immobilisation, qui présente sur sa périphérie un profil d'enclenchement complémentaire (27), le profil d'enclenchement et le profil d'enclenchement complémentaire coopérant par verrouillage, dans la position d'immobilisation du boulon de liaison, pour empêcher le boulon de liaison de sortir axialement hors de l'ouverture de réception de boulon, et autorisant, dans la position de libération du boulon de liaison, un mouvement de sortie axial du boulon de liaison hors de l'ouverture de réception de boulon.

6. Unité de boîtier de raccordement à encastrer dans un mur selon la revendication 5,
**caractérisée en outre en ce que** l'interface d'actionnement du corps de liaison comprend une interface d'outil frontale (28) du boulon de liaison.

7. Unité de boîtier de raccordement à encastrer dans un mur selon la revendication 5 ou 6,
**caractérisée en outre en ce que** le profil d'enclenchement comprend une ou plusieurs nervures d'enclenchement (24a) espacées axialement les unes des autres, qui s'étendent chacune à l'intérieur d'un secteur périphérique de nervure d'enclenchement (U_{R}) de l'ouverture de réception de boulon, et le profil d'enclenchement complémentaire comprend une ou plusieurs nervures d'enclenchement complémentaires (27a) espacées axialement les unes des autres, qui s'étendent chacune à l'intérieur d'un secteur périphérique de nervure d'enclenchement complémentaire (U_{G}).

8. Unité de boîtier de raccordement à encastrer dans un mur selon l'une des revendications 5 à 7,
**caractérisée en outre en ce que** le profil d'enclenchement, à l'extérieur du secteur périphérique de nervure d'enclenchement, et/ou le profil d'enclenchement complémentaire, à l'extérieur du secteur périphérique de nervure d'enclenchement complémentaire, comprend au moins une nervure à crans (27b) à l'intérieur d'un secteur périphérique de nervure à crans (U_{A}).

9. Unité de boîtier de raccordement à encastrer dans un mur selon l'une des revendications 1 à 8,
**caractérisée en outre par** un dispositif anti-perte (29) qui maintient le corps de liaison prémonté sur le corps à surface fonctionnelle de manière à éviter toute perte.

10. Unité de boîtier de raccordement à encastrer dans un mur selon l'une des revendications 1 à 9,
**caractérisée en outre par** un cran de fin de course (32) qui, en position d'immobilisation, fait enclencher le corps de liaison sur le corps à surface fonctionnelle de manière à pouvoir le désenclencher.

11. Unité de boîtier de raccordement à encastrer dans un mur selon l'une des revendications 2 à 10,
**caractérisée en outre par** un dispositif anti-rotation (33) qui comprend des butées de fin de course correspondantes (33a, 33b) sur le corps de liaison mobile en rotation, d'une part, et sur le corps à surface fonctionnelle ou sur la structure de liaison, d'autre part.

12. Unité de boîtier de raccordement à encastrer dans un mur selon l'une des revendications 1 à 11,
**caractérisée en outre en ce que** le corps à surface fonctionnel comprend un corps annulaire fermé (34) ayant une ouverture (35) de passage de portion de douille et au moins une ouverture (30) de passage de corps de liaison.

13. Unité de boîtier de raccordement à encastrer dans un mur selon l'une des revendications 1 à 12,
**caractérisée en outre en ce que** la portion de douille et la portion de base du corps de boîtier sont formées d'un seul tenant à partir d'un matériau en mousse plastique, la structure de liaison étant moulée sur la portion de base.

14. Unité de boîtier de raccordement à encastrer dans un mur selon l'une des revendications 3 à 13,
**caractérisée en outre en ce que** la portion de douille et la portion de base du corps de boîtier sont formées d'un seul tenant à partir d'un matériau en mousse plastique, l'élément de structure de liaison étant noyé dans le matériau en mousse plastique de la portion de base.
